# EUROPÄISCHE PATENTSCHRIFT

(11) **EP 0 860 405 B1**
(45) Veröffentlichungstag und Bekanntmachung des Hinweises auf die Patenterteilung: **12.12.2001**
(21) Anmeldenummer: 98102968.9
(22) Anmeldetag: 19.02.1998
(51) Int. Cl.: C03C 25/10, C08L 83/04, D06M 11/83, D06N 3/12, E04F 10/02

(54) **Wetterfester, nicht brennbarer Stoff und Verfahren zu dessen Herstellung**
Weatherproofed, fire-resistant fabric and process for the preparation thereof
Tissu résistant aux intempéries et résistant au feu et procédé pour sa fabrication

(30) Priorität: 19.02.1997 DE 19706340
(43) Veröffentlichungstag der Anmeldung: 26.08.1998
(73) Patentinhaber: Sattler AG, 8041 Graz-Thondorf (AT)
(72) Erfinder: Lauterburg, Nikolaus, 3550 Langnau/Emmental (CH)
(74) Vertreter: Zipse + Habersack

(56) Entgegenhaltungen:
- EP-A- 0 150 385
- EP-A- 0 400 614
- EP-A- 0 543 401
- EP-A- 0 559 575
- EP-A- 0 560 380
- EP-A- 0 651 019
- EP-A- 0 775 772
- US-A- 4 478 895
- US-A- 4 666 765

## Beschreibung

Die Erfindung betrifft einen wetterfesten, nicht brennbaren und durchsichtigen Stoff, der großflächig rollbar sein muß, um somit für Markisenstoffe und andere entsprechende Abschattungsvorrichtungen verwendet zu werden.

Die US 4,666,765 offenbart eine Silikonbeschichtung für ein PTFE beschichtetes Glasfasergewebe, die eine höhere Flammbeständigkeit des Gewebes in Kombination mit einer besseren Transparenz des Gewebes bewirken soll.

Der vorliegenden Erfindung liegt die Aufgabe zugrunde, einen nach DIN 4102 A2 nicht brennbaren, weitgehend lichtdurchlässigen und hochbelastbaren Stoff zu schaffen.

Diese Aufgabe wird erfindungsgemäß durch einen Stoff mit den Merkmalen des Anspruchs 1 gelöst. Vorteilhafte Weiterbildungen der Erfindung sind Gegenstand der Unteransprüche.

Erfindungsgemäß wird ein Stoff basierend auf einem nicht brennbaren Grundgewebe aus Glasfasern verwendet. Von den Materialien wird eine Nicht-Brennbarkeit bei 800°C gefordert, wenn eine Nicht-Brennbarkeit nach DIN 4102 A2 erfüllt werden soll. Für das nicht brennbare Grundgewebe werden deshalb Spundglasgarne zu einem beidseitig gleichen Leinwandgewebe mit einer Rohdichte zwischen 150 und 350 g/m² Rohgewicht verarbeitet.

Der Stoffsollte darüber hinaus eine geringstmögliche Licht(IR)transmission und einen geringstmöglichen Sonnenenergiedurchlaß haben. Ein metall-, vorzugsweise aluminiumbedampftes Glasgewebe wird als Träger verwendet. Dem unbehandelten Glasgewebe wird dann vorab in einer Vakuumvorrichtung die vorhandene Restfeuchtigkeit entzogen. Nach einem Trocknungslauf folgt, vorzugsweise in der gleichen Maschine, die einseitige, eventuell in einem späteren Durchlauf oder in einer spiegelsymmetrischen Anlage, auch eine zweiseitige Aluminiumbedampfung.

Die anschließend aufgebrachte Beschichtung muß zum einen das Glasgewebe für rollfähige Anwendungen, z.B. Markisen, adaptieren und zusätzlich eine Oxidation der Metallschicht verhindern. Gleichzeitig darf durch die Beschichtung die Nicht-Brennbarkeit nicht beeinträchtigt werden und die Lichtdurchlässigkeit, d.h. die Durchsichtigkeit des Stoffes darf durch die Beschichtung nicht verringert werden. Alle diese Eigenschaften werden durch eine Silikonbeschichtung erfüllt, wobei eine ideale Verknüpfung all dieser Eigenschaften durch eine Silikonbeschichtung erhalten wird, die die drei folgenden Komponenten a) bis c) in einem Anteil von 25 bis 50 Gew.-% a), 25 bis 50 Gew.-% b) und 5 bis 15 Gew.-% c) enthält.

Die Komponente a) ist ein reaktives organo-funktionelles Siloxan, dessen Silikonölphase eine Zusammensetzung eines vinyl-funktionellen Harzes mit einem Si-H-funktionellen Vernetzer enthält.

Die Komponente b) ist ein reaktives organo-funktionelles Siloxan, dessen Silikonölphase eine Zusammensetzung eines hexenylfunktionellen und eines Si-H-funktionellen Vernetzers enthält.

Die Komponente c) ist ein organo-funktionelles Siloxan, das einen Katalysatoranteil enthält.

Vorzugsweise sind die Zusammensetzungen in allen drei Komponenten a) bis c) durch Polyvinylacetat stabilisiert. Die Komponente c) ist vorzugsweise in einem vinylfunktionellen Polymer dispergiert und enthält Platin als Katalysator.

Die Beschichtung enthält vorzugsweise weiterhin 0 bis 10 Gew.-% eines alkyl-modifizierten Melaminformaldehyds, um die Griffigkeit des Markisenstoffes zu beeinflussen. Weiterhin enthält der Stoff vorzugsweise 5 bis 15 Gew.-% einer kollodialen Kieselsäure-Dispersion, die als Schiebefestmittel wirkt, d.h. die Adhäsion der Gewebefilamente an den Kreuzungspunkten verbessert und damit die Schiebefestigkeit des Gewebes verbessert.

Vorzugsweise wird die Beschichtung beidseitig auf den Stoff aufgebracht, wodurch ein idealer Schutz des Grundgewebes erhalten wird. Die oben genannte Zusammensetzung der Beschichtung erfüllt in idealer Art die Forderung nach Durchsichtigkeit des Gewebes und auf der anderen Seite nach einem ausreichenden Schutz des Glasfasergrundgewebes und Nichtbrennbarkeit.

Wenn die Beschichtung als wäßriger Kompound aufgetragen und durch eine thermische Behandlung vernetzt wird, kann die Beschichtung gleichmäßig, homogen und dünn aufgetragen werden. Zum anderen wird eine intensive Verbindung der Beschichtung mit dem Grundgewebe erzielt.

Indem die Beschichtung in einer Konzentration von 5 bis 20 gr/m² Feststoff auf das Glasfasergewebe aufgetragen wird, wird sowohl den Anforderungen an die Beschichtung zum Schutz des Grundgewebes als auch den Anforderungen an die Duchsichtigkeit des Stoffes Rechnung getragen.

Der erhaltene Stoff ist nach DIN 4102 A2 nicht brennbar und hält höchsten Belastungen im Außenbereich, wie extremen Temperaturschwankungen und Strahlungseinwirkung stand. Der Markisenstoff ist jedoch auch im Innenbereich, z.B. in Messe-, Bürogebäuden oder Bahnhöfen, einsetzbar. Der Stoff hat eine äußerst gleichmäßige Struktur und ist somit für vielfältige Aufgabenbereiche im Innen-, Deko- und Außenbereich als Sonnenschutz oder allein zu dekorativen Zwecken einsetzbar.

## Patentansprüche

1. Wetterfester nicht brennbarer Stoff nach DIN 4102 A2, insbesondere für Markisen, bestehend aus einem Glasfasergewebe, das beidseitig eine Silikonbeschichtung enthält,
**dadurch gekennzeichnet,**
**daß** der Stoff vor der Beschichtung zumindest einseitig metall-, vorzugsweise aluminiumbedampft ist.

2. Stoff nach Anspruch 1,
**dadurch gekennzeichnet,**
**daß** die Silikonbeschichtung folgende Bestandteile enthält:
a) 25-50 Gew.-% eines reaktiven organofunktionellen Siloxans, dessen Silkonölphase eine Zusammensetzung eines Vinyl-funktionellen Harzes mit einem Si-H funktionellen Vernetzer enthält,
b) 25-50 Gew.-% eines reaktiven organofunktionellen Siloxans, dessen Silkonölphase eine Zusammensetzung eines hexenylfunktionellen und eines Si-H funktionellen Vernetzers enthält, und
c) 5-15 Gew.-% eines reaktiven organofunktionellen Siloxans mit einem Anteil an Katalysator enthält.

3. Stoff nach Anspruch 2,
**dadurch gekennzeichnet,**
**daß** der Katalysator der Komponente c) Platin enthält.

4. Stoff nach Anspruch 2 oder 3,
**dadurch gekennzeichnet,**
**daß** die Komponente c) in einem vinyl-funktionellen Polymer dispergiert ist.

5. Stoff nach einem der vorhergehenden Ansprüche,
**dadurch gekennzeichnet,**
**daß** die Komponenten a), b) und/oder c) durch Polyvinylacetat stabilisiert sind.

6. Stoff nach einem der vorhergehenden Ansprüche,
**dadurch gekennzeichnet,**
**daß** die Beschichtung 0-10 Gew.-% alkyl-modifiziertes Melamin-Formaldehyd enthält.

7. Stoff nach einem der vorhergehenden Ansprüche,
**dadurch gekennzeichnet,**
**daß** die Beschichtung 5-15 Gew.-% kolloidale Kieselsäuredispersion enthält.

8. Verfahren zur Herstellung eines wetterfesten nicht brennbaren Stoffes nach einem der vorhergehenden Ansprüche,
bei dem einem unbehandelten Glasfasergewebe die Restfeuchtigkeit entzogen wird,
ein- oder beidseitig eine Metallbedampfung aufgebracht wird und anschließend die Beschichtung als wäßriger Kompound aufgetragen und durch eine thermische Behandlung vernetzt wird.

9. Verfahren nach Anspruch 8,
**dadurch gekennzeichnet,**
**daß** die Beschichtung in einer Konzentration von 5 bis 20 g/m² Feststoff auf das Glasfasergewebe aufgetragen wird.

10. Markise hergestellt mit einem Markisenstoff nach einem der Ansprüche 1 bis 7 oder durch ein Verfahren nach Anspruch 8 oder 9.

## Claims

1. A weather-resistant incombustible fabric according to DIN 4102 A2, especially for awnings, comprising a woven glass fibre cloth containing a silicone coating on both sides,
**characterized in that**
the fabric was metallized, preferably aluminized, by a vapour deposition process on one side at least prior to coating.

2. A fabric according to claim 1,
**characterized in that**
the silicone coating contains the following constituents:
a) 25 to 50% by weight of a reactive organofunctional siloxane whose silicone oil phase contains a composition of a vinyl-functional resin with an Si-H-functional crosslinker,
b) 25 to 50% by weight of a reactive organofunctional siloxane whose silicone oil phase contains a composition of a hexenyl-functional crosslinker and an Si-H-functional crosslinker,
c) 5 to 15% by weight of a reactive organofunctional siloxane comprising a catalyst fraction.

3. A fabric according to claim 2,
**characterized in that**
the catalyst of component c) contains platinum.

4. A fabric according to claim 2 or 3,
**characterized in that**
the component c) is dispersed in a vinylfunctional polymer.

5. A fabric according to any one of the preceding claims,
**characterized in that**
the components a), b) and/or c) are stabilized by polyvinyl acetate.

6. A fabric according to any one of the preceding claims,
**characterized in that**
the coating contains 0-10% by weight of alkylmodified melamime formaldehyde.

7. A fabric according to any one of the preceding claims,
**characterized in that**
the coating contains 5-15% by weight of colloidal silica dispersion.

8. A process for preparing a weather-resistant incombustible fabric according to any one of the preceding claims, which comprises an untreated woven glass fibre cloth having its residual moisture content removed, a metal being applied on one or both sides by a vapour deposition process and then the coating being applied as an aqueous compound and crosslinked by a thermal treatment.

9. A process according to claim 8,
**characterized in that**
the coating is applied to the woven glass fibre cloth in a concentration of from 5 to 20 g/m² of solids.

10. An awning produced using an awning fabric according to any of claims 1 to 7 or by a process according to claim 8 or 9.

## Revendications

1. Tissus résistant aux intempéries et au feu selon DIN 4102 A2, notamment pour des stores, composé d'un tissu en fibre de verre, qui comporte des deux côtés un revêtement en silicone, **caractérisé en ce que** le tissu reçoit au moins d'un côté , avant d'être revêtu , une vaporisation en métal, de préférence en aluminium.

2. Tissu selon la revendication 1, **caractérisé en ce que** le revêtement en silicone comporte les composants suivants:
a) 25 à 50 % en poids d'un siloxane organofonctionnel réactif don't la phase d'huile de silicone présente une composition d'une résine fonctionnelle avec un ramificateur Si-H fonctionnel,
b) 25 à 50 % en poids d'un siloxane organofonctionnel réactif dont la phase d'huile de silicone présente une composition d'un ramificateur hexényle-fonctionnel et d'un ramificateur Si-H fonctionnel, et
c) 5 à 15 % en poids d'un siloxane organofonctionnel réactif avec un part d'un catalysateur.

3. Tissu selon la revendication 2, **caractérisé en ce que** le catalysateur du composant c) comporte du platine.

4. Tissu selon la revendication 2 ou 3, **caractérisé en ce que** le composant c) est dispersé dans un polymère vinyl-fonctionnel.

5. Tissu selon une des revendications précédentes, **caractérisé en ce que** les composants a), b) et/ou c) sont stabilisés par un polyvinylacétate.

6. Tissu selon une des revendications précédentes, **caractérisé en ce que** le revêtement comporte 0 à 10 % en poids de mélamine-formaldéhyde alkyle-modifié.

7. Tissu selon une des revendications précédentes, **caractérisé en ce que** le revêtement comporte 5 à 15 % en poids d'une dispersion d'acide silicique colloïdale.

8. Procédé de fabrication d'un tissu résistant aux intempéries et au feu selon une des revendications précédentes, dans lequel on a retiré à un tissu en fibre de verre non traité l'humidité résiduelle, dans lequel on a appliqué d'un côté ou des deux côtés une vaporisation métallique et dans lequel le revêtement est appliqué en tant que composite aqueux et ramifié par un traitement thermique.

9. Procédé selon la revendication 8, **caractérisé en ce que** le revêtement est appliqué sur le tissu en fibre de verre avec une concentration de 5 à 20 % g/m2 de solide.

10. Store qui est fabriqué d'un tissu de store selon une des revendications 1 à 7 ou par un procédé selon la revendication 8 ou 9.
